# EUROPEAN PATENT SPECIFICATION

(11) **EP 1 059 182 B1**
(45) Date of publication and mention of the grant of the patent: **24.05.2006**
(21) Application number: 00401587.1
(22) Date of filing: 06.06.2000
(51) Int. Cl.: B60H 1/00, B60H 1/32

(54) **Vehicular air conditiioner**
Fahrzeugklimaanlage
Appareil de climatisation pour véhicules

(30) Priority: 07.06.1999 US 326609
(43) Date of publication of application: 13.12.2000
(73) Proprietor: MITSUBISHI HEAVY INDUSTRIES, LTD., Tokyo (JP); GENERAL MOTORS CORPORATION, Detroit, Michigan 48265-3000 (US)
(72) Inventor: Hirao, Toyotaka Mitsubishi Heavy Industries Ltd, Nagoya-shi, Aichi-ken (JP); Niwa, Kazuki, Mitsubishi Heavy Industries Ltd, Nishi-Kasugai-gun, Aichi-ken (JP); Akimoto, Ryosaku, Mitsubishi Heavy Industries Ltd, Nishi-Kasugai-gun, Aichi-ken (JP); Major, Gregory A., Beverly Hills, MI 48025 (US); Zeng, Xin, Warren, MI 48090 (US)
(74) Representative: Ilgart, Jean-Christophe

(56) References cited:
- EP-A- 0 236 787
- DE-A- 19 833 251
- US-A- 5 273 105
- US-A- 5 605 051

## Description

### 1. Field of the Invention

The present invention relates to a vehicular air conditioner which is installed in vehicles such as automobiles, and in particular to a vehicular air conditioner where a vehicular air conditioner using a heat pump is provided with a heating heat exchanger with the engine cooling water as a heat source.

### 2. Description of the Related Art

Recently, there has been an increasing demand for introducing a low-pollution vehicle and alternative energy vehicle, accompanied with demands for improving the air environment and environmental problems. When the energy source is replaced by natural gas, this is basically a change only in the fuel, and there is no need to change the basic structure of an air conditioning apparatus (hereinafter referred to as an air conditioner), since there is still an internal combustion engine (hereinafter referred to as an engine).

If however a conventional air conditioner is used as is, in an electric vehicle or a hybrid vehicle (using both an electric motor and an engine as a drive source) which is one of the strong candidates for the alternative energy vehicle, it is necessary to reconsider the heat source during the heating operation and the compressor drive source during the cooling operation.

That is to say, a problem arises in that during the heating operation, with electric vehicles there is no engine cooling water to serve as the heating source as in the conventional vehicles, and in hybrid vehicles there is a motor travelling mode in which the engine is stopped and the vehicle is driven only by the electric motor, and hence sufficient warm water cannot be obtained.

Moreover, during the cooling operation, the drive source for the compressor cannot rely only upon the engine as with conventional vehicles, and another drive source must be provided. For example, in the case of a hybrid vehicle, there is a motor travelling mode in which the vehicle is driven only by the electric motor, or even if the vehicle is driven by the engine, at the time of stopping, the engine is stopped so as not to run in idle. Hence stable operation of the air conditioner is not possible when only the engine is used as the drive source for the compressor.

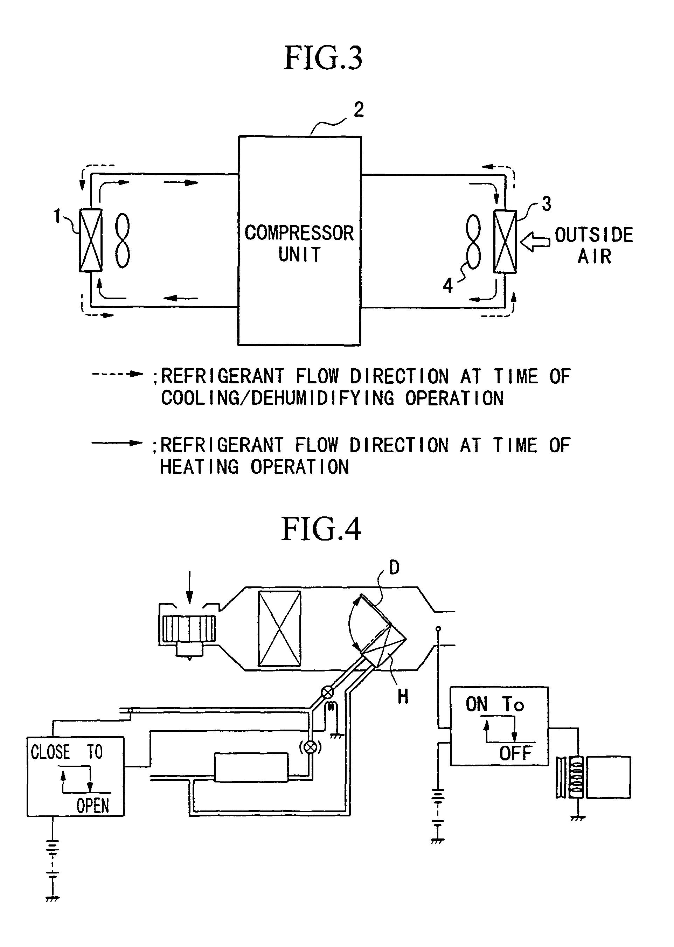

From this background, a heat pump type air conditioner used in household cooling/heating air conditioners has been adopted as the air conditioner installed in vehicles such as the electric vehicles and hybrid vehicles. Fig 3 shows a schematic structural diagram of a conventional vehicular air conditioner using a heat pump. In the figure, numeral 1 denotes an indoor heat exchanger, 2 denotes a compressor unit, 3 denotes an outdoor heat exchanger, and 4 denotes a fan for drawing in outside air. In this case, the outdoor heat exchanger 3 is installed inside of an engine compartment together with the compressor unit 2 and the like. By activating the fan 4 for drawing in outside air, the outside air can be drawn into the engine compartment.

With the above described conventional construction, a refrigerant is circulated as described below to effect cooling and heating in the vehicle cabin.

The refrigerant during the heating operation circulates in a clockwise direction, as shown by the solid arrow in the figure. The refrigerant which is changed to a high-temperature and high-pressure gas by the compressor in the compressor unit 2 is sent to the indoor heat exchanger 1 to exchange heat with the air outside the vehicle (the outside air) or with the air inside the vehicle (the inside air). As a result, the outside air or the inside air (hereinafter referred to as intake air) becomes hot air by absorbing heat from the high-temperature and high-pressure gas refrigerant, and at the same time, the high-temperature and high-pressure gas refrigerant losses heat to be changed into a condensate, and becomes a high- temperature and high-pressure liquid refrigerant.

Subsequently, the high-temperature and high-pressure liquid refrigerant passes through the compressor unit 2 where it is expanded to become a low-temperature and low-pressure liquid refrigerant and is sent to the outdoor heat exchanger 3. In the outdoor heat exchanger 3, the low-temperature and low-pressure liquid refrigerant draws up heat from the outside air and is evaporated and gasified to become a low-temperature an low-pressure gas refrigerant. This low-temperature and low-pressure gas refrigerant is again sent to the compressor unit 2 and compressed, to become a high-temperature and high-pressure gas. Hereafter, the above described process is repeated.

That is to say, during the heating operation, the outdoor heat exchanger 3 functions as an evaporator, and the indoor heat exchanger 1 functions as a condenser.

The refrigerant during the cooling/dehumidifying operation circulates in the counterclockwise direction as shown by the broken line arrow in the figure. The refrigerant witch is changed to a high-temperature and high-pressure gas by the compressor in the compressor unit 2 is sent to the outdoor heat exchanger 3 to exchange heat with the outside air. As a result, the refrigerant gives up heat to the outdoor air and is changed into a condensate, becoming a high-temperature and high-pressure liquid refrigerant. The refrigerant which becomes the high-temperature and high-pressure liquid refrigerant as described above passes through a throttling resistance in the compressor unit 2 to become a low-temperature and low-pressure liquid refrigerant, and is then sent to the indoor heat exchanger 1.

Subsequently, the low-temperature and low-pressure liquid refrigerant absorbs heat from the vehicle cabin air, in the indoor heat exchanger 1 to cool the air. Hence cool air can be supplied to the vehicle cabin, and at the same time, the refrigerant itself is evaporated and gasified to become a low-temperature and low-pressure gas refrigerant. The refrigerant which becomes the low-temperature and low-pressure gas refrigerant is again sent to the compressor in the compressor unit 2, and compressed to become a high-temperature and high-pressure gas. Hereafter, the above described process is repeated. That is, during the cooling operation, the indoor heat exchanger 1 functions as an evaporator, and the outdoor heat exchanger 3 functions as a condenser.

In the case where the above described conventional vehicular air conditioner using a heat pump is mounted in a vehicle incorporating an internal combustion engine, such as a conventional vehicle or a hybrid vehicle, it is desirable effectively utilize he waste heat from the engine during the heating operation.

That is to say, under an operating conditions when travelling with the engine as the drive source and hence the high temperature cooling water can be sufficiently used as the heat source, then if a heating heat exchanger, referred to as a heater core, is provided, and the high temperature engine cooling water introduced thereto, then the intake air passing through the heater core can be heated to enable heating.

As an example of conventional technology of such a vehicular air conditioner, there is the apparatus as described in Japanese Patent Application, first Publication No. Sho 61-94811. With this conventional technology, as shown in FIG. 4, temperature adjustment is affected by air mixing. Hence the heater core with the engine cooling water as the heat source, is provided at an incline, and a damper which adjusts the quantity of the passing air in accordance with the opening thereof, is provided as a means for controlling the heat exchange capacity of the heater core. A similar prior art is disclosed in DE 198 33 251 A.

The apparatus of Japanese Patent Application, First Publication No. Sho 61-94811 is effective, however higher performance is required.

In consideration of the above situation, it is an object of the present invention to provide a vehicular air conditioner which can shorten the heating start up time at the time of the heating operation, and improve the heating capacity, and for which the load on the air distribution fan is reduced.

The apparatus of Japanese Patent Application, First Publication No. Sho 61-94811 originated from giving priority to keeping the flow path which does not pass through the heater core as large as possible at the time of the cooling operation, and to air mixing performance. Consequently the flow of the intake air tends to become complicated. For example, if the heater core is installed in an inclined condition, the through flow distance is increased, and hence the pressure loss of the intake air passing through the heater core is increased. As a result there is the problem of an increase in the load on the distribution fan. Moreover, since with the operation of fully closing the heater core inlet with the damper, the area through which the intake air can pass is reduced, there is an increase in flow resistance from the pressure loss due to the heater core itself. Consequently, there is also an increase in the load on the distribution fan due to this.

If the load on the distribution fan is increased in this way, then there is the problem that the power consumption of the electric motor serving as the fan drive source is increased, and the operating noise of the air conditioning apparatus is increased. Furthermore, the complicated air flow due to air mixing is a source of an increase in load on the distribution fan, and air conditioning noise. In particular, in the case of a hybrid vehicle having a motor drive mode, since there is no engine noise, then the air conditioning noise becomes noticeable, and since power consumption is increased, then the possible travelling distance is shortened.

EP 0 236 787 discloses a particular air conditioner system, in which a damper is provided above a hater core to open or close a duct leading to the windscreen.

A part of the air skirts the heater core in normal circumstances, and enters the duct directly, the damper being in the open state. Conversely, the damper is brought in the closed state when a strong de-icing is required, all the air must flow through the heater core, before a part of the flow is directed towards the windscreen, which is heated more.

### SUMMARY OF THE INVENTION

To address the above problems, the following means are employed in the present invention.

The vehicular air conditioner according to a first embodiment of the present invention comprises a heat pump, with a compressor unit equipped with a compressor, a throttling resistance and a four way valve, connected by a refrigerant path to an indoor heat exchanger for effecting heat exchange between a refrigerant and intake air, and an outdoor heat exchanger for effecting heat exchange between a refrigerant and outside air, which executes a cooling operation and a heating operation by switching a direction of the flow of the refrigerant, provided with an air distribution fan, and a heating heat exchanger connected to an engine cooling water system, wherein there is provided an air conditioning unit with the indoor heat exchanger and the heating heat exchanger arranged in sequence from an upstream side in a casing which serves as a flow path for the intake air, and an air flow path formed in a part above the heating heat exchanger by-passing the heating heat exchanger, and provided with an open/close device for switching the air flow path between either of a fully closed and a fully open condition, wherein the open/close means is arranged so that it does not close the heating heat exchanger in both the conditions. The bypass air passage is located above the heating heat exchanges when the air conditioner is mounted. The air flow through the bypass follows a straight flow with respect to the intake air path.

In this case, the heating heat exchanger is preferably installed upright in the casing, and the compressor is preferably a variable capacity type.

With such a vehicular air conditioner, since the construction is such that the air flow path formed by the heating heat exchanger is switched between fully closed and fully open by means of the opening/closing device, then the passage for the intake air can be shut off by the opening/closing device so that the area becomes zero. As a result, the pressure loss of the flow path can be reduced, and the load on the distribution fan can be reduced. Moreover, since the flow of the intake air is uniform, the discharge temperature can be easily adjusted by controlling the air volume from the distribution fan.

Moreover, if the heating heat exchanger is installed upright, then the length of the passage through the heating heat exchanger is reduced, and hence the pressure loss of the heating heat exchanger itself can be reduced.

Furthermore, by using the variable capacity type compressor, then temperature control using air mixing becomes unnecessary.

The vehicular air conditioner according to a second embodiment of the present invention further comprises a bypass valve provided in the engine cooling water system, so as to be able to form an engine cooling water bypass flow path which bypasses the heating heat exchanger.

The bypass valve in this case is preferably a flow control valve.

With such a vehicular air conditioner, in the case where heating is not required, then the full amount of engine cooling water is introduced to the bypass flow path so that the engine cooling water is not supplied to heating heat exchanger. Consequently, the situation where the intake air which has become cold air from passing through the indoor heat exchanger is heated by the heating heat exchanger so that the temperature rises, can be avoided.

Moreover, by making the bypass valve a flow control valve, then the flow quantity of the engine cooling water supplied to the heating heat exchanger and of the engine cooling water introduced to the bypass passage can be controlled, enabling adjustment of the discharge temperature.

The vehicular air conditioner according to a third embodiment of the present invention further comprises a cooling water pump provided in the engine cooling water system for operating when the engine is stopped.

With such a vehicular air conditioner, by means of the cooling water pump which operates when the engine is stopped, engine cooling water can be supplied to the heating heat exchanger even when the engine is stopped. Therefore the heat held by the engine cooling water can be effectively used even when the engine is stopped. This use of waste heat in the engine cooling water is particularly effective for hybrid vehicles where the engine is frequently stopped.

### BRIEF DESCRIPTION OF THE DRAWINGS

FIG. 1 is a schematic flow diagram showing a construction of a vehicular air conditioner according to one embodiment of the present invention.
FIG. 2 is a plan view showing an arrangement of a hybrid vehicle mounted with the vehicular air conditioner using a heat pump shown in FIG. 1.
FIG. 3 is a schematic flow diagram showing an outline construction of a vehicular air conditioner using a heat pump, being a conventional example.
FIG. 4 is a diagram showing conventional technology for a vehicular air conditioner.

### DESCRIPTION OF THE PREFERRED EMBODIMENTS

As follows is a description of a hybrid vehicle mounted with a vehicular air conditioner, as one embodiment of the present invention, with reference to the appended drawings.

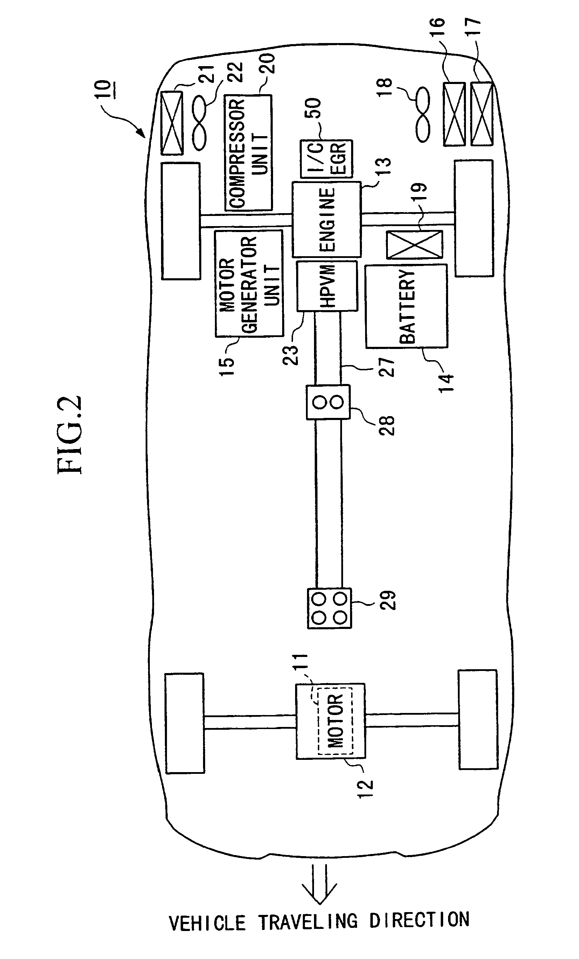

In FIG. 2, numeral 10 denotes a hybrid vehicle, equipped with a drive unit 12 in the front part of the vehicle body, having a motor housed therein for driving front wheels, and an engine 13 in an engine compartment in the rear part of the vehicle body, for driving rear wheels. The hybrid vehicle 10 runs as a front-wheel-drive vehicle at the time of low speed driving, using the motor 11 as a drive source, and runs as a rear-wheel-drive vehicle at the time of high speed driving exceeding a certain speed, by switching the drive source to the engine 13. Since the motor 11 is provided in the front part of the vehicle body, the engine 13 is arranged in the rear part of the vehicle body, in consideration of the freedom of installation space and reduction in air resistance (Cd value).

In addition, there is a case where the engine 13 and the motor 11 are activated as the drive source at the same time, to run as a four-wheel-drive vehicle.

In FIG. 2, numeral 14 denotes a battery which is a power source for the motor 11, and numeral 15 denotes a motor generator unit for converting the driving force of the engine 13 into electrical power and storing the electrical power in the battery 14. An electrical power generation motor (not shown) is mounted in the motor generator unit 15, and electrical power is generated by transmitting the driving force from the engine 13 to the electrical power generation motor. Moreover, the motor generator unit 15 has a function to convert electrical power stored in the battery 14 into the driving force, by driving the electrical power generation motor with the electrical power.

Numeral 50 denotes an I/C (inter-cooler) EGR system provided in the engine 13.

Numeral 16 denotes a radiator for cooling the engine 13, and 17 denotes a radiator for power elements, provided together with the radiator 16 for cooling the engine 13. The radiator 16 for the power elements is for cooling the driving motor 11, and the motor generator unit 15. The radiator 16 for cooling the engine and the radiator 17 for the power elements are equipped with a radiator cooling fan 18 which passes outside air drawn in from the side face of the vehicle body through the radiators for cooling and thereby releases heat to the air in the inner periphery of the engine room.

Moreover, there is provided a battery heat exchanger 19 for transferring heat from the engine 13 to the battery 14.

Next is a description of an air conditioner mounted in the hybrid vehicle 10.

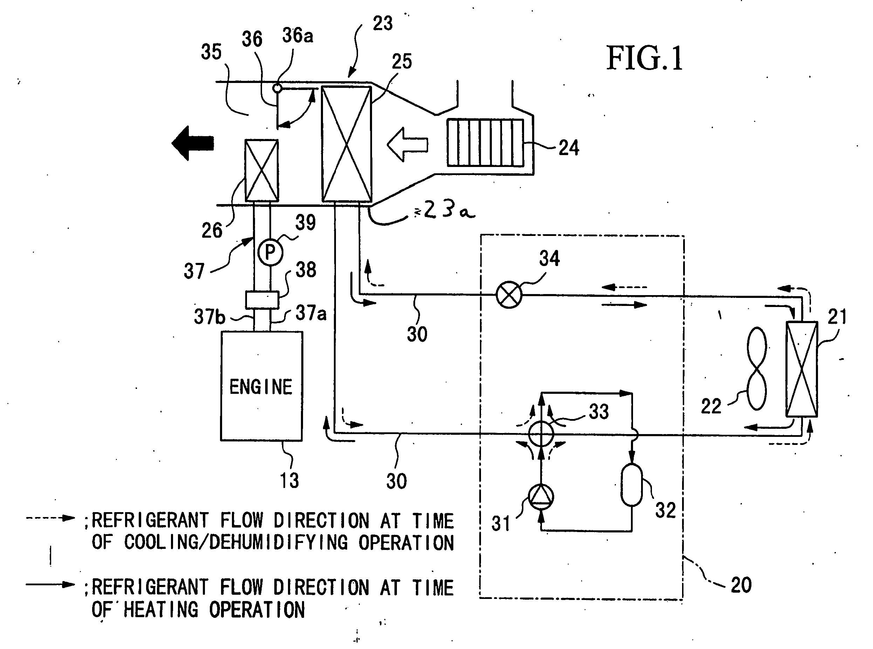

With the first embodiment shown in FIG. 1 and FIG. 2, numeral 20 denotes a compressor unit with a variable refrigerant supply capacity, 21 denotes an outdoor heat exchanger, 22 denotes a fan for drawing in outside air, and 23 denotes an air conditioning unit referred to as an HPVM (Heat Pump Ventilating Module) which incorporates equipment such as a blower fan 24 provided as a distribution fan, an indoor heat exchanger 25 and a heater core 26 serving as a heating heat exchanger, arranged sequentially in the flow direction inside a casing 23a serving as a flow path for intake air.

The outdoor heat exchanger 21 is arranged on the right side face in the engine room disposed in the rear part of the vehicle body, for forcibly exchanging heat between outside air drawn in from an opening on the side face of the vehicle body by operation of the fan 22 for drawing in outside air, and refrigerant flowing inside the heat exchanger. The air conditioning unit 23 is arranged in the middle of the rear part of the vehicle body, with a front face of the unit 21 connected to a duct 27 extending to the front of the vehicle body along a center of a lower part of the vehicle body. The duct 27 is formed in a tubular shape and is provided with air outlet sections 28 and 29 in the central portion and in the front end of the duct 27, respectively. In this case, the air outlet section 28 is for the rear seats, and the air outlet section 29 is for the front seats, but these may increased or decreased according to need.

The air conditioning unit 23 is a module for executing cooling, heating and dehumidifying to effect air conditioning, by making outside air drawn in from outside the vehicle body or inside air drawn in from the vehicle cabin with the operation of the blower fan 24, pass through the indoor heat exchanger 25 and the heater core 26.

The indoor heat exchanger 25 is connected by a refrigerant path 30 to the compressor unit 20 and the outdoor heat exchanger 21 to constitute the air conditioner using a heat pump. The compressor unit 20 comprises a variable capacity compressor 31, an accumulator 32, a four way valve 33 and a throttling resistance 34 such as an expansion valve, and operates the variable capacity compressor 31 to circulate the refrigerant which is quantity controlled according to air conditioning load, to thereby execute the heat pump operation. In this case, temperature adjustment of the discharge air is effected by controlling the refrigerant supply quantity with the variable capacity compressor 31.

Moreover, in the abovementioned air conditioning unit 23 there is provided an air flow path 35 formed in a part above the heater core 26 which is installed upright inside the casing 23a, and there is provided a damper 36 serving as open/close device for selectively switching the air flow path 35 between either of fully closed and fully open. The damper 36 is attached to the upper wall interior of the casing 23a with a hinge 36a so as to be able to swing relative thereto.

Consequently, with the damper 36 fully closed, the intake air drawn into the blower fan 24 passes in full through the indoor heat exchanger 25 and the heater core 26, to be air conditioned. In this case, since the heater core 26 is upright, the through flow distance of the intake air flow path is smaller than for when this is inclined, and hence the pressure loss due to passing through the heater core can be reduced by that amount.

Moreover, with the damper 36 fully open, the intake air drawn into the damper 36 is branched into two, and flows through the air flow path 35 and the path through the heater core 26. At this time, the air flow path on the heater core 26 side has a substantial pressure loss compared to the air flow path 35 side, and hence the intake air actually flowing through the heater core 26 is a reduced quantity. Consequently, the overall flow path area is greater compared to when the heater core 26 is covered by a damper or the like, and hence the pressure loss is reduced by that amount.

The heater core 26 is connected to the engine cooling water system 37 of the engine 13 and is supplied by high temperature engine cooling water, and thus has a heating function for heating the passing intake air. The engine cooling water system 37 of the engine 13 is a circuit in which engine cooling water which is circulated inside the engine by means of a pump (not shown in the figure) which is operated by taking part of the output from the engine 13 as a drive force, and thus becomes a high temperature, is sent to the radiator 16 and cooled by dissipating heat to the outside air.

Here, while not shown in the figure, with a normal engine cooling water system 37 a thermostat valve is provided. The thermostat valve remains closed until the engine cooling water becomes a high temperature above a predetermined value, thus preventing circulation to the radiator 16 so that the engine cooling water is warmed up in a short time.

As follows is a description of the air conditioning operation by means of the abovementioned air conditioner, considered separately for the cooling/dehumidifying operation and for the heating operation.

First, the heating operation will be described. The normal heating operation employs a mode where the damper 36 is fully closed and the engine cooling water flows in the heater core 26. In this case, the inside air or outside air (referred to hereunder as the intake air) drawn into the casing 23a by operation of the blower fan 24 passes through the indoor heat exchanger 25 and then passes through the heater core 26 to be heated by the heat of the engine cooling water. As a result, warmed up intake air is introduced to the duct 27 and discharged from the respective discharge sections 28, 29. Hence heating of the vehicle cabin can be effected using this intake air. Under travelling conditions with the engine 13 driving, if there is a normal heating load, then this can be adequately met with such a heating operation.

Here, depending on requirements, if a cooling/dehumidifying operation as described later is executed with the heat pump air conditioning apparatus, then dehumidified intake air which has passed through the indoor heat exchanger 25 can also be heated to give heating.

Incidentally, with the heating operation with the above described heater core 26, when the outside air is not extremely cold, or when the engine 13 is operating so that high temperature engine cooling water is sufficiently supplied, there is no particular problem. However, in the case where these conditions are not met, for example when the engine cooling water temperature is low, or when the heating load is high, then an insufficient heating capacity occurs, such as taking time for the heating operation to start up. When in this way the heating requirements go above a certain level, the variable capacity compressor 31 inside the compressor unit 20 is driven so that the heating operation by the air conditioner using a heat pump is executed at the same time as that by the heater core.

The level for the heating requirement can be judged for example by detecting the discharge temperature.

As follows is a description of the heating operation of the air conditioner using a heat pump. At this time, the refrigerant flow is clockwise in FIG. 1 (shown by the solid line arrow).

The variable capacity compressor 31 draws in and compresses the low-temperature and low-pressure gas refrigerant and outputs an amount of refrigerant corresponding to the cooling load to the four way valve 33 as a high-temperature and high-pressure gas refrigerant. At this time, since the four way valve 33 is so set as to send the refrigerant to the indoor heat exchanger 25, the high-temperature and high-pressure gas refrigerant is sent to the indoor heat exchanger 25 through the refrigerant path 30, and heat is exchanged with the intake air drawn in by the blower fan 24 to warm the air. That is to say, the heat of the high-temperature and high-pressure gas refrigerant is absorbed by the intake air, and the high-temperature and high-pressure gas refrigerant is changed to a condensate and becomes a high-temperature and high-pressure liquid refrigerant. At the same time, the intake air passing through the indoor heat exchanger 25 is heated by this heat and supplied to the vehicle cabin as warm air. The indoor heat exchanger 25 in this case functions as a condenser.

The refrigerant exiting from the indoor heat exchanger 25 as the high-temperature and high-pressure liquid refrigerant is decompressed and expanded by the throttling resistance 34 in the compressor unit 20 to become a low-temperature and low-pressure liquid refrigerant, and is then sent to the outdoor heat exchanger 21 installed along the side face of the vehicle body. Outside air drawn in by the fan 22 for drawing in outside air passes through the outdoor heat exchanger 21, and the outdoor heat exchanger 21 exchanges heat with outside air to draw up the heat. Therefore, the low-temperature and low-pressure liquid refrigerant is warmed by the outside air which has a relatively higher temperature, and is evaporated and gasified to become a low-temperature and low-pressure gas refrigerant. The outdoor heat exchanger 21 in this case functions as an evaporator.

The refrigerant which has become the low-temperature and low-pressure gas is then sent to the four way valve 33 and directed to the accumulator 33 where the liquid component is removed, after which the gas is again drawn into the compressor 21 and compressed. Hereafter, the same refrigeration cycle is repeated to effect heating of the vehicle cabin.

On the other hand, the intake air which has passed through the indoor heat exchanger 25 to become warm air passes in full through the heater core 26 since the damper 36 is fully closed, and is reheated. Consequently, compared to heating with the heater core 26 alone, this is heated in two stages by the indoor heat exchanger 25 and the heater core 26. Hence the amount of heat heating the intake air is increased. Moreover, the heating due to the heater core 26 is performed.on high temperature intake air. Therefore, the heating performance is increased so that when initiating the heating operation, the temperature can be raised quickly. Moreover, even in the case where the temperature of the intake air is low, the warmed warm air can be discharged until the desired temperature is reached to enable heating.

At this time, if air quantity control is executed by the blower fan 24, then the discharge temperature can be easily controlled. That is, with the damper 36 fully closed, conditions on the flow path side do not change. Hence if the heating conditions of the indoor heat exchanger 25 and the heater core 26 are constant, then by increasing the quantity of intake air, the discharge temperature is decreased while conversely by decreasing the air quantity, the discharge temperature is increased.

Here, since the heater core 26 is upright, then the pressure loss when passing through the heater core 26 is minimized, and hence the load on the blower fan 24 is reduced.

On the other hand, in the case where the temperature of the engine cooling water is low, then the heating operation is substantially performed only by the air conditioner using a heat pump. Hence at first, the damper 36 is opened fully, so that heating is mainly by the warm air passing through the air flow path 35. The heating operation by means of the air conditioner using a heat pump continues until the engine cooling water temperature supplied to the heater core 26 goes above a predetermined value. Since with the operation with the damper 36 fully opened, there is a flow of warm air passing through the air flow path 35 and the heater core 26, the area of the flow path is large so that the resistance value is low. Consequently, the pressure loss is reduced, and the load on the blower fan 24 is also reduced. Moreover, the flow of intake air (warm air) becomes a uniform flow being approximately a straight flow. Hence from this point also the load on the blower fan 24 is reduced, and hence the noise accompanying the air conditioning operation can be reduced.

At the time of executing the heating operation with only the abovementioned air conditioner using a heat pump, by fully closing the damper 36, the engine cooling water inside the heater core 26 can be heated. Hence the temperature of the engine cooling water which reduces the discharge temperature, can be raised to a predetermined value quickly so that the heating operation with the abovementioned two stage heating can be executed in a short time.

Next is a description of the cooling operation. The damper 36 at this time is in the fully open position, and the flow of the refrigerant is in the counterclockwise direction in FIG. 1 (shown by the broken line arrow).

The variable capacity compressor 31 draws in and compresses the low-temperature and low-pressure gas refrigerant, and outputs refrigerant with the supply quantity changed corresponding to cooling load, to the four way valve 33 as a high-temperature and high-pressure gas refrigerant. At this time, since the four way valve 33 is so set as to send the refrigerant to the outdoor heat exchanger 21, the high-temperature and high-pressure gas refrigerant is sent to the outdoor heat exchanger 21 through the refrigerant path 30, and heat is exchanged with outside air drawn in by the fan 22 for drawing in outside air. As a result, the heat of the high-temperature and high-pressure gas refrigerant is absorbed by the outside air which has a relatively lower temperature, and the high-temperature and high-pressure gas refrigerant is changed to a condensate and becomes a high-temperature and high-pressure liquid refrigerant. The outdoor heat exchanger 21 in this case functions as a condenser.

Hereafter, the high-temperature and high-pressure liquid refrigerant is sent to the throttling resistance 34, and decompressed and expanded in passing through the throttling resistance 34 to become a low-temperature and low-pressure liquid refrigerant. The low-temperature and low-pressure liquid refrigerant is then sent to the indoor heat exchanger 25 and exchanges heat with the intake air drawn in by the blower fan 24, and absorbs heat from the intake air to effect cooling. As a result, the low-temperature and low-pressure liquid refrigerant is evaporated and gasified to become a low-temperature and low-pressure gas refrigerant. At the same time, the intake air becomes cool air and passes through the air flow path 35 and the heater core 26 to be supplied to the vehicle cabin. At this time, the area of the flow path through which the cold air flows is increased by the part that can pass though the heater core 26. Hence the pressure loss is reduced, so that the load on the blower fan 24 is reduced. Moreover, the noise accompanying the air conditioning operation is also reduced. The indoor heat exchanger 25 in this case functions as an evaporator.

Moreover, the low-temperature and low-pressure gas refrigerant exiting from the indoor heat exchanger 25 is sent to the accumulator 32 through the four way valve 33, and the liquid component in the refrigerant is removed. The low-temperature low-pressure gas refrigerant is then again drawn into the compressor 31 from the accumulator 32 and compressed, after which the same refrigeration cycle is repeated to effect cooling of the vehicle cabin.

Next is a description of a second embodiment of a vehicular air conditioner according to the present invention with reference to FIG. 1. With this embodiment, a bypass valve 38 is provided in the engine cooling system 37, so as to be able to form a bypass flow path which bypasses the heater core 26. The bypass valve 38 is connected between a primary side flow path 37a which introduces engine cooling water to the heater core 26 from the engine 13, and a secondary side flow path 37b which returns the engine cooling water to the engine 13 from the heater core 26, so as to be able to selectively form a bypass flow path which returns to the engine 13 without passing through the heater core 26. That is to say, by opening and closing the bypass valve 38, then one or other of a normal engine cooling water flow path from the engine 13 passing through the heater core 26 and returning to the engine 13, or an engine cooling water bypass flow path from the engine 13 returning to the engine 13 via the bypass valve 38 can be selected.

For this bypass valve 38, for example a fully closed/fully open type such as a solenoid valve may be used. For example, a flow control valve which can control the flow quantity of engine cooling water such as with a butterfly valve is preferable.

By providingsuch a bypass valve 38, then at the time of the cooling operation, the full quantity of engine cooling water can be switched so as to flow to the bypass flow path. Hence the situation where the intake air which has become cold air from passing through the indoor heat exchanger 25 is heated by the heat of the engine cooling water supplied to the heater core 26, can be avoided. That is, the situation where the intake air which has been cooled by the indoor heat exchanger 25 is heated by the heating heater core 26 so that the temperature rises can be avoided, and hence there is no loss in cooling capacity.

Moreover, if a flow control valve is employed for the bypass valve 38, then the flow quantity of engine cooling water bypassing the heater core 26 can be appropriately adjusted within a range from 0 ~ 100%. Therefore, the intake air which has been cooled by the indoor heat exchanger 25 or the intake air which has simply passed through the indoor heat exchanger 25 can be appropriately heated by the heater core 26, enabling the discharge temperature to be adjusted. That is, this can be set so that if the flow quantity of the engine cooling water flowing to the heater core 26 is increased, the heating amount is increased with this increase so that the discharge temperature is increased. Conversely, if the flow quantity of engine cooling water flowing to the heater core 26 is reduced, the discharge temperature is reduced.

With the second embodiment described here, in addition to the single application, this may be combined with the abovementioned first embodiment. In particular, during the cooling operation, since in order to reduce the pressure loss, the heater core 26 is made an intake air flow path in addition to the air flow path 35, this embodiment can prevent the reduction in the cooling capacity due to heating of the cold air which has been expressly been cooled by the indoor heat exchanger 25.

In addition to temperature adjustment of the intake air passing through the indoor heat exchanger 25 by controlling the supply amount of refrigerant with the variable capacity compressor 31, if a flow control valve is employed for the bypass valve 38 to adjust the temperature of the intake air passing through the heater core 26, then it is possible to finely adjust the temperature of the discharge air with a uniform flow of intake air.

Next is a description of a third embodiment of a vehicular air conditioner according to the present invention with reference to FIG. 1.

With this embodiment, a cooling water pump 39 is provided in the engine cooling water system 37. The cooling water pump 39 has an electric motor (not shown in the figure) operated for example by a battery 14, as a drive source. When the engine 13 is operating, the power supply to the electric motor is stopped. Furthermore, when the engine is stopped, then particularly at the time of the heating operation, the power supply to the electric motor is started as required to operate the cooling water pump 39 so that engine cooling water is circulated to the heater core 26 by the cooling water pump 39.

When the engine 13 is operating, then a normal pump (not shown) housed in the engine is operated to circulate the engine cooling water.

When such a cooling water pump 39 is provided, high temperature engine cooling water can be supplied to the heater core 26 even after the engine 13 has stopped, and used in the heating operation. That is, in the case of the abovementioned hybrid vehicle, since normally high speed travelling is performed with the engine 13, then after engine travelling has continued for more than a certain amount, the engine cooling water will remain at a high temperature for quite a while even after switching to the motor travelling mode.

Consequently, if the heat of this engine cooling water is supplied to the heater core 26 and effectively utilized, then heating can be obtained without operating the air conditioner using a heat pump, and hence power consumption of the battery 14 can be restrained.

Moreover if, as described for the first embodiment, the heater core 26 and the air conditioner using a heat pump are used together, then the heating capacity of the vehicular air conditioner can improve the time limit due to the engine cooling water being at a low temperature.

Needless to say, the third embodiment also can be suitably combined with the above mentioned first embodiment and second embodiment and executed.

Moreover, with the above described vehicular air conditioner, a variable capacity compressor has been used in the air conditioner using a heat pump. However it is also possible to use a constant volume compressor, and effect operation by on/off control with a clutch.

In the above description, the vehicle in which the vehicular air conditioner is installed is a hybrid vehicle. However needless to say this may be applicable to a vehicle having an internal combustion engine as with conventional vehicles.

With the vehicular air conditioner of the present invention as described above, the following effects are obtained.
(1) Since there is provided an air conditioning unit with, the indoor heat exchanger and the heating heat exchanger arranged in sequence from an upstream side in the casing which serves as a flow path for the intake air, and the air flow path formed in the part above the heating heat exchanger, and provided with the open/close device for switching the air flow path between the fully closed and the fully open condition, then during the heating operation, the air flow path provided in the part above the heating heat exchanger can be closed and set so that the full amount of intake air passes through the heating heat exchanger. Consequently, in the case of a large heating load with the air conditioner using a heat pump in the heating operation condition, the intake air can be heated successively in two stages by the indoor heat exchanger and the heating heat exchanger. Therefore, the heating capacity can be improved and the heating start up time can be shortened. At this time, if the air quantity is controlled by the distribution fan, then the discharge temperature can be easily adjusted.
(2) When the open/close device is fully closed, since the heating heat exchanger is installed upright, the passage distance is shorter than when installed inclined, and hence the pressure loss due to the through flow of intake air can be reduced. Moreover, when the open/close device is fully open, the air flow path and the heating heat exchanger become the through flow path for the intake air, and hence the through flow area is increased so that the pressure loss is reduced. Consequently, the load on the distribution fan can be reduced, enabling a reduction in the power consumption of the drive source and in the noise during air conditioning operation.
(3) Reduction of the power consumption of the distribution fan and of the air conditioning noise is particularly desirable with hybrid vehicles. That is to say, a reduction in power consumption reduces the consumption of the battery so that the travelling distance using the motor is increased. Moreover, a reduction in air conditioning operating noise improves comfort at the time of motor travelling.
(4) Since a bypass valve is provided in the engine cooling water system, and a bypass path is formed for passing engine cooling water which bypasses the heating heat exchanger, then in the case where heating is not required, the full amount of engine cooling water can be introduced to the bypass flow path, thereby preventing the supply of engine cooling water to the heating heat exchanger (heater core). Consequently, the intake air which has been cooled by passing through the indoor heat exchanger is not heated by the heating heat exchanger so that the temperature is not increased, and hence there is no drop in the cooling capacity.
(5) Since a flow control valve is employed for the bypass valve, then the flow quantity of the engine cooling water supplied to the heating heat exchanger and of the engine cooling water introduced to the bypass path can be controlled, enabling temperature adjustment during heating.
(6) Since the cooling water pump which can be operated when the engine is stopped is provided in the engine cooling water system, then engine cooling water can be supplied to the heating heat exchanger even when the engine is stopped. Consequently, the heat of the engine cooling water can be effectively used even when the engine is stopped, enabling an improvement in the heating capacity of the vehicular air conditioner.

## Claims

1. A vehicular air conditioner comprising a heat pump, with a compressor unit (20) equipped with a compressor (31), a throttling resistance (34) and a four way valve (33), connected by a refrigerant path to an indoor heat exchanger (25) for effecting heat exchange between a refrigerant and intake air, and an outdoor heat exchanger (21) for effecting heat exchange between a refrigerant and outside air, which executes a cooling operation and a heating operation by switching a direction of the flow of said refrigerant, provided with an air distribution fan, and a heating heat exchanger (26) connected to an engine cooling water system (37), wherein there is provided an air conditioning unit (23) with, said indoor heat exchanger and said heating heat exchanger arranged in sequence from an upstream side in a casing (23a) which serves as a flow path for said intake air, and an air flow path (35) formed in a part above said heating heat exchanger and provided with an open/close means (36) for switching the air flow path between either of a fully closed and a fully open condition, the open/close means being arranged so that it does not close the heating heat exchanger in both the conditions, **characterised in that**
said that air flow path (35) formed above said heating heat exchanger by-passes said heating heat exchanger and said flow path for said intake air follows a straight flow with respect to the bypass air flow path (35).

2. A vehicular air conditioner according to claim 1, wherein said heating heat exchanger is installed upright through the flow path defined by said casing.

3. A vehicular air conditioner according to either one of claim 1 and claim 2, wherein said compressor is a variable capacity type.

4. A vehicular air conditioner system comprising a vehicular air conditioner according to claim 1, wherein a bypass valve (38) is provided in said engine cooling water system (37), so as to be able to forman engine cooling water bypass flow path which bypasses said heating heat exchanger.

5. A vehicular air conditioner system according to claim 4, wherein said bypass valve is a flow control valve.

6. A vehicular air conditioner system comprising a vehicular air conditioner according to claim 1 wherein a cooling water pump (39) is provided in said engine cooling water system for operating when the engine is stopped.

## Patentansprüche

1. Fahrzeug-Klimaanlage, die eine Wärmepumpe, eine Kompressoreinheit (20), die mit einem Kompressor (31) ausgerüstet ist, einen Drosselungswiderstand (34) und ein Vierwegeventil (33), das über einen Kühlmittelweg mit einem Innenraum-Wärmetauscher (25) für die Ausführung eines Wärmeaustausches zwischen einem Kühlmittel und Ansaugluft und mit einem Außen-Wärmetauscher (21) für die Ausführung eines Wärmeaustausches zwischen einem Kühlmittel und Außenluft verbunden ist, umfasst, die einen Kühlbetrieb und einen Heizbetrieb durch Umschalten der Strömungsrichtung des Kühlmittels ausführt und mit einem Luftverteilungsgebläse sowie mit einem Heiz-Wärmetauscher (26), der mit einem Motorkühlwassersystem (37) verbunden ist, versehen ist, wobei eine Klimatisierungseinheit (23) vorgesehen ist, wobei der Innenraum-Wärmetauscher und der Heiz-Wärmetauscher nacheinander ausgehend von einer Einlassseite in einem Gehäuse (23a) angeordnet sind, das als ein Strömungsweg für die Ansaugluft dient, und wobei ein Luftströmungsweg (35) in einem Teil über dem Heiz-Wärmetauscher ausgebildet und mit einer Öffnungs-/Schließeinrichtung (36) versehen ist, um den Luftströmungsweg entweder zwischen einem vollständig geschlossenen oder einem vollständig geöffneten Zustand umzuschalten, wobei die Öffnungs-/Schließeinrichtung so angeordnet ist, dass sie den Heiz-Wärmetauscher nicht in beiden Zuständen schließt, **dadurch gekennzeichnet, dass**
der Luftströmungsweg (35), der über dem Heiz-Wärmetauscher gebildet ist, den Heiz-Wärmetauscher umgeht und der Strömungsweg für die Ansaugluft einer geradlinigen Strömung in Bezug auf den Umgehungsluftströmungsweg (35) folgt.

2. Fahrzeugklimaanlage nach Anspruch 1, bei der der Heiz-Wärmetauscher aufrecht durch den durch das Gehäuse definierten Strömungsweg installiert ist.

3. Fahrzeugklimaanlage nach Anspruch 1 oder Anspruch 2, bei der der Kompressor vom Typ mit variabler Kapazität ist.

4. Fahrzeugklimaanlagensystem, das eine Fahrzeugklimaanlage nach Anspruch 1 umfasst, wobei in dem Motorkühlwassersystem (37) ein Umgehungsventil (38) vorgesehen ist, um einen Motorkühlwasser-Umgehungsströmungsweg bilden zu können, der den Heiz-Wärmetauscher umgeht.

5. Fahrzeugklimaanlagensystem nach Anspruch 4, bei dem das Umgehungsventil ein Strömungssteuerventil ist.

6. Fahrzeugklimaanlagensystem, das eine Fahrzeugklimaanlage nach Anspruch 1 umfasst, wobei in dem Motorkühlwassersystem eine Kühlwasserpumpe (39) vorgesehen ist, die arbeitet, wenn der Motor angehalten ist.

## Revendications

1. Climatiseur de véhicule comprenant une pompe à chaleur, avec une unité de compresseur (20) équipée d'un compresseur (31), d'une résistance d'étranglement (34) et d'une vanne à quatre voies (33), reliée par un trajet de fluide frigorigène à un échangeur de chaleur intérieur (25) pour effectuer un échange de chaleur entre un fluide frigorigène et de l'air d'admission et à un échangeur de chaleur extérieur (21) pour effectuer un échange de chaleur entre un fluide frigorigène et de l'air extérieur, qui exécute une opération de refroidissement et une opération de chauffage en commutant une direction de l'écoulement dudit fluide frigorigène, pourvu d'un ventilateur de distribution d'air, et d'un échangeur de chaleur de chauffage (26) relié à un système d'eau de refroidissement de moteur (37), dans lequel il est prévu une unité de conditionnement d'air (23) avec ledit échangeur de chaleur intérieur et ledit échangeur de chaleur de chauffage agencés en série à partir d'un côté amont dans un boîtier (23a) qui sert de trajet d'écoulement pour ledit air d'admission, et un trajet d'écoulement d'air (35) formé dans une partie au-dessus dudit échangeur de chaleur de chauffage et pourvu de moyens d'ouverture/fermeture (36) pour commuter le trajet d'écoulement d'air entre l'une ou l'autre d'une condition de fermeture complète et d'une condition d'ouverture complète, les moyens d'ouverture/fermeture étant agencés de sorte qu'ils ne ferment pas l'échangeur de chaleur de chauffage dans les deux conditions, **caractérisé en ce que**
ledit trajet d'écoulement d'air (35) formé au-dessus dudit échangeur de chaleur de chauffage contourne ledit échangeur de chaleur de chauffage et ledit trajet d'écoulement pour ledit air d'amission suit un écoulement droit par rapport au trajet d'écoulement d'air (35) de dérivation.

2. Climatiseur de véhicule selon la revendication 1, dans lequel ledit échangeur de chaleur de chauffage est installé verticalement à travers le passage d'écoulement défini par ledit boîtier.

3. Climatiseur de véhicule selon l'une ou l'autre de la revendication 1 et de la revendication 2, dans lequel ledit compresseur est d'un type à capacité variable.

4. Système de climatiseur de véhicule comprenant un climatiseur de véhicule selon la revendication 1, dans lequel une vanne de dérivation (38) est prévue dans ledit système d'eau de refroidissement de moteur (37), de manière à être capable de former un trajet d'écoulement de dérivation d'eau de refroidissement de moteur qui contourne ledit échangeur de chaleur de chauffage.

5. Système de climatiseur de véhicule selon la revendication 4, dans lequel ladite vanne de dérivation est une vanne de régulation de débit.

6. Système de climatiseur de véhicule comprenant un climatiseur de véhicule selon la revendication 1, dans lequel une pompe à eau de refroidissement (39) est prévue dans ledit système d'eau de refroidissement de moteur pour fonctionner lorsque le moteur est arrêté.
